# EUROPÄISCHE PATENTANMELDUNG

(11) **EP 1 344 753 A1**
(43) Veröffentlichungstag der Anmeldung: **17.09.2003**
(21) Anmeldenummer: 03001481.5
(22) Anmeldetag: 23.01.2003
(51) Int. Cl.: C03C 17/10, H05B 3/44

(54) **Infrarotstrahler mit Hüllrohr und darauf befindlicher metallischer Reflexionsschicht, sowie Verfahren zu deren Herstellung**

(30) Priorität: 13.03.2002 DE 10211249
(71) Anmelder: Heraeus Noblelight GmbH, 63450 Hanau (DE); W.C. Heraeus GmbH & Co. KG, 63450 Hanau (DE)
(72) Erfinder: Lukas, Annette, 63517 Rodenbach (DE); Fuchs, Stefan, 63843 Niedernberg (DE)
(74) Vertreter: Kühn, Hans-Christian

(57) **Zusammenfassung**

Um Strahlungsverluste bei Infrarotstrahlern mit in einem Hüllrohr aus Quarzglas oder Quarzgut angeordnetem Heizleiter zu vermindern, ist auf wenigstens einen Teil der Oberfläche des Hüllrohres eine metallische Reflexionsschicht aufgebracht, die durch Einbrennen eines Glanzedelmetallpräparats auf Quarzglas oder Quarzgut-Oberflächen bei einer Minimaltemperatur von +900°C, bestehend aus einer oder mehreren organischen Edelmetallverbindungen, mindestens einem Flussmittel aus organischen Metallverbindungen und mindestens einem organischen Träger, der als Bindemittel dient, gebildet wird. Die Edelmetall aufweisende Reflexionsschicht kann zusätzlich mit einem anorganischen Schutzüberzug versehen sein.

## Beschreibung

Die Erfindung betrifft einen Infrarotstrahler mit in einem Hüllrohr aus Quarzglas oder Quarzgut angeordnetem Heizleiter und einer auf wenigstens einen Teil der Oberfläche des Hüllrohres aufgebrachten metallischen Reflexionsschicht, sowie ein Verfahren zur Bildung der Reflexionsschicht.

Aus der EP 0 465 759 B1 ist ein Infrarotstrahler mit in einem Hüllrohr aus Quarzglas oder Quarzgut angeordnetem Heizleiter bekannt, wobei auf der Rückseite des Hüllrohres eine metallische Reflexionsschicht aufgebracht ist, um Strahlungsverluste zu vermindern. Die Reflexionsschicht besteht aus Gold, Palladium, Platin, einer Gold-Palladium-Legierung oder einer Gold-Platin-Legierung und ist mit einem Schutzüberzug aus Zirkoniumdioxid, Siliziumdioxid, Zinndioxid oder einem Gemisch aus mindestens zwei dieser Oxide versehen.

Weiterhin ist aus der EP 1 043 294 B1 ein Glanzedelmetallpräparat zum Einbrennen auf Keramik/Porzellanoberflächen bei einer Minimaltemperatur von 900°C bekannt, welches aus einer oder mehreren organischen Edelmetallverbindungen, mindestens einem Flussmittel aus organischen Metallverbindungen und mindestens einem Träger bekannt, wobei das Glanzedelmetallpräparat rhodiumfrei ist, mindestens eine organische Gold-Platin-Silber- oder Palladium-Verbindung enthält, Cr in Form mindestens einer organischen Verbindung aufweist, wobei der Cr-Gehalt 0,01 bis 1,0 Mol Cr pro Mol Edelmetall beträgt und der Edelmetallgehalt, bezogen auf das Präparat, im Bereich von 2 bis 20 Gewichts-% liegt.

Ausgehend von einem Infrarotstrahler, wie er aus der EP 0 465 759 B1 bekannt ist, liegt der Erfindung die Aufgabe zugrunde, eine hochtemperaturbeständige metallische Reflexionsschicht für Infrarotstrahler zu schaffen, die in einem Bereich bis zu 1200°C ausreichend stabil ist.

Die Aufgabe wird dadurch gelöst, dass die Reflexionsschicht aus einem Glanzedelmetallpräparat durch Einbrennen auf Quarzglas oder Quarzgut bei einer Minimaltemperatur von +900°C gebildet ist, wobei das Glanzedelmetallpräparat aus einer oder mehreren organischen Edelmetallverbindungen, mindestens einem Flussmittel aus organischen Metallverbindungen und mindestens einem organischen Träger, der als Bindemittel dient, besteht.

Als besonders vorteilhaft erweist sich die hohe Temperaturbeständigkeit der Reflexionsschicht bis zu einer Erwärmung von 1250°C.

Vorteilhafte Ausgestaltungen des Infrarotstrahlers gemäß Anspruch 1 sind in den Ansprüchen 2 bis 14 angegeben.

In einer vorteilhaften Ausgestaltung wird die Reflexionsschicht aus einem Glanzedelmetallpräparat gebildet, das rhodiumfrei ist und mindestens eine organische Gold-, Platin-, Silber- oder Palladium-Verbindung aufweist, wobei Chrom in Form mindestens einer organischen Verbindung vorgesehen ist und der Cr-Gehalt von 0,01 bis 1,0 Mol Cr pro Mol Edelmetall beträgt und wobei der Edelmetallgehalt bezogen auf das Präparat im Bereich von 6 bis 20 Gewichts-% liegt. Die so gebildete Reflexionsschicht weist wenigstens ein Edelmetall aus Elementen der Gruppe Gold, Platin, Palladium und Silber auf; in der Praxis hat sich eine Gold aufweisende Reflexionsschicht hinsichtlich ihrer Stabilität besonders bewährt.

In einer weiteren bevorzugten Ausgestaltung weist die Reflexionsschicht eine Goldlegierung auf, die wenigstens eine Komponente aus Platin, Palladium oder Silber enthält.

In einer weiteren vorteilhaften Ausgestaltung weist die Reflexionsschicht eine Legierung mit Komponenten aus Gold, Platin und Palladium auf. Dabei liegt der Cr-Gehalt der Reflexionsschicht vorzugsweise im Bereich von 0,05 bis 0,4 Mol Cr pro Mol Edelmetall.

Der Gesamtgehalt der Reflexionsschicht an Si, Cr und Ni beträgt 0,25 bis 1,50 Mol pro Mol Edelmetall.

In einer vorteilhaften Ausgestaltung der Erfindung weist das zur Bildung der Reflexionsschicht vorgesehenen Glanzedelmetallpräparat mindestens ein weiteres Element aus der Gruppe Cu, Co, Sn, Zr und Bi in Form organischer Verbindungen auf, wobei der Gehalt an Cu, Co, Sn, Zr und Bi jeweils bis 0,3 Mol pro Mol Edelmetall beträgt.

Die anschließend gebildete Reflexionsschicht weist dann zusätzlich mindestens ein Element aus der Gruppe Cu, Co, Sn, Zr und Bi auf, wobei der Gehalt an Cu, Co, Sn, Zr und Bi jeweils bis 0,3 Mol pro Mol Edelmetall beträgt.

Darüber hinaus wird zur Bildung der Reflexionsschicht in einer vorteilhaften Ausgestaltung der Erfindung ein Glanzedelmetallpräparat mit mindestens einem weiteren Element aus der Gruppe B, Al, Ca, Ti, V, Mn, Fe, Zn, Ge, Pb, Sr, Mo, Ru, In, Ba, Ta, W, Os, Ir und Ce in Form organischer Verbindungen eingesetzt, wobei der Gehalt an B, Al, Ca, Ti, V, Mn, Fe, Zn, Ge, Pb, Sr, Mo, Ru, In, Ba, Ta, W, Os, Ir und Ce jeweils bis 0,3 Mol pro Mol Edelmetall beträgt. Dabei beträgt der Edelmetallgehalt bezogen auf das Präparat, 6 bis 14 Gewichts-%.

Die anschließend gebildete Reflexionsschicht weist dann zusätzlich mindestens ein weiteres Element aus der Gruppe B, Al, Ca, Ti, V, Mn, Fe, Zn, Ge, Pb, Sr, Mo, Ru, In, Ba, Ta, W, Os, Ir und Ce auf, wobei der Gehalt an B, Al, Ca, Ti, V, Mn, Fe, Zn, Ge, Pb, Sr, Mo, Ru, In, Ba, Ta, W, Os, Ir und Ce jeweils bis 0,3 Mol pro Mol Edelmetall beträgt.

Die Reflexionsschicht ist thoriumfrei, wobei die Dicke der Reflexionsschicht im Bereich von 0,05 µm bis 5 µm liegt. Die Reflexionsschicht ist in einer vorteilhaften Ausgestaltung auf einem als Hohlzylinder ausgebildeten Hüllrohr aufgebracht.

In einer weiteren vorteilhaften Ausgestaltung ist die Reflexionsschicht auf einem als Teil eines Zwillingsrohres ausgebildeten Hüllrohr aufgebracht.

Vorzugsweise ist die Reflexionsschicht auf einem kreiszylindrischen Hüllrohr als Mantelsegment mit einem Öffnungswinkel im Bereich von 50° bis 300° aufgebracht.

Die Reflexionsschicht kann zusätzlich mit anorganischen Schutzüberzügen versehen werden. Diese sind gewöhnlich silikatisch aufgebaut und enthalten beispielsweise Zirkonoxid, Siliciumdioxid oder Zinnoxid oder Mischungen aus diesen Oxiden.

Bei einem Verfahren zur Aufbringung einer Reflexionsschicht auf ein Hüllrohr aus Quarzglas oder Quarzgut für einen mit Heizleiter versehenen Infrarotstrahler wird das zuvor beschriebene Glanzedelmetallpräparat, wie es sich auch aus den Ansprüchen 1, 2 und 7 ergibt, auf wenigstens eine Oberfläche bzw. einen Teil der Oberfläche des Hüllrohres aufgebracht und nachfolgend in einem Temperaturbereich von 900°C bis 1300°C, vorzugsweise im Temperaturbereich von 900°C bis 1200°C eingebrannt. Das Glanzedelmetallpräparat wird durch Aufsprühen, Aufstreichen (z.B. mit Pinsel) oder durch andere Applikationsverfahren z.B. mittels eines Abziehbildes auf die Oberfläche des Hüllrohres aufgebracht.

Zur Beschichtung ist dabei entweder ein Teil der Oberfläche auf der Rückseite oder ein Teil der Oberfläche auf der Innenseite des Hüllrohres vorgesehen.

Das nachfolgende Beispiel dient zur Erläuterung der Erfindung.

### Beispiel

Ein Glanzgoldpräparat, bestehend aus

| | |
|---|---|
| Goldsulforesinat (54 % Au) | 18,5 Gewichts-% |
| Chromresinat (10 % Cr) | 5,0 Gewichts-% |
| Siliciumresinat gelöst in Pine-ÖI (10 % Si) | 5,0 Gewichts-% |
| Nickelresinat (10 % Ni) | 5,0 Gewichts-% |
| geschwefeltes Terpentinöl | 30,0 Gewichts-% |
| Xylol | 15,0 Gewichts-% |
| Pine-ÖI | 21,5 Gewichts-%, |

wird mit dem Pinsel auf ein Hüllrohr aus Quarzglas aufgetragen und anschließend mit einer Temperatur im Bereich von 900° bis 1300°C und einer Aufheizrate von 20 K/min gebrannt. Es bildet sich ein gelbgoldener, hochglänzender, sehr abriebsfester Goldfilm auf dem Hüllrohr; der gelbgoldene, hochglänzende Goldfilm weist eine sehr gute Haftfestigkeit und eine hohe Temperaturbeständigkeit für eine Erwärmung bis zu 1250°C auf.

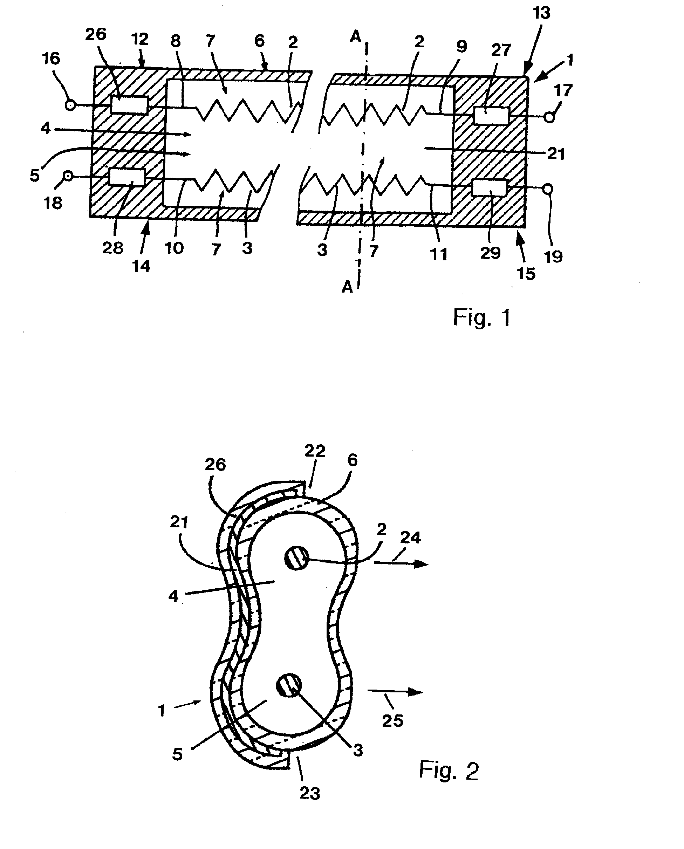

Anhand der Figuren 1 und 2 ist der Gegenstand der Erfindung näher erläutert.

Figur 1 zeigt schematisch einen Infrarotstrahler mit zwei zueinander parallel angeordneten Glühwendeln in einem Gehäuse aus Quarzglas, wobei zwecks besserer Übersicht auf die Darstellung der Gesamtlänge verzichtet wird (gebrochene Darstellung im Bereich des mittleren Teils).

Figur 2 zeigt einen Querschnitt längs der Linie AA durch den Infrarotstrahler nach Figur 1.

Gemäß Figur 1 weist der als Doppelrohrstrahler ausgebildete Infrarotstrahler 1 zwei zueinander parallel angeordnete Glühwendel 2, 3 auf, die sich jeweils in zueinander parallel angeordneten Hüllrohrsegmenten 4, 5 befinden, die ein Quarzglasgehäuse als Hüllrohr 6 mit einem gemeinsamen Innenraum 7 bilden. Die Wendel 2, 3 sind an ihren jeweiligen Enden 8, 9 sowie 10 und 11 mittels blattförmiger Stromdurchführungen 26, 27, 28, 29 aus Molybdän im jeweiligen Quetschbereich der Rohrenden 12, 13, 14, 15 jeweils mit einem äußeren Anschlusskontakt 16, 17, 18, 19 elektrisch und mechanisch verbunden; über die Anschlusskontakte erfolgt die Energieversorgung der Glühwendel 2, 3. Auf der dem Innenraum 7 gegenüber liegenden äußeren Rückseite des Quarzglasgehäuses als Hüllrohr 6 ist eine metallische Reflexionsschicht aufgebracht, welche für eine Bündelung der von den Glühwendeln 2, 3 erzeugten Infrarotstrahlung in eine vorgegebene Strahlungsrichtung sorgt, wie anhand Figur 2 näher erläutert wird.

Gemäß Figur 2 weist das die schematisch im Querschnitt dargestellten Glühwendel 2, 3 umhüllende Quarzglasgehäuse als Hüllrohr 6 eine auf der Rückseite dieses Gehäuses - d.h. entgegen der Strahlenaustrittsrichtung - aufgebrachte Reflexionsschicht 21 mit einem Glanzedelmetall auf, die jeweils bis zum unteren bzw. oberen Scheitelpunkt 22, 23 der jeweiligen Hüllrohrsegmente 4, 5 reicht; diese Art der Beschichtung entspricht ungefähr einem Austrittswinkel im Bereich von 170 bis 180° bei kreiszylindrischen Hüllrohren. Mit Hilfe der Reflexionsschicht 21 wird die von den Glühwendeln 2, 3 gebildete Strahlung so gebündelt, dass sie entlang der Strahlenaustrittsachsen 24, 25 von der jeweiligen Wendel aus gesehen jeweils austritt. Dabei sind die Strahlenaustrittsachsen 24, 25 den jeweils im Querschnitt dargestellten Glühwendeln 2, 3 zugeordnet.

Da die aufgebrachte Reflexionsschicht 21 aus einer sehr dünn aufgetragenen Edelmetall enthaltenden Schicht besteht, kann diese zusätzlich durch einen auf der Rückseite der Reflexionsschicht 21 aufgebrachten Schutzüberzug 26 aus anorganischem Werkstoff geschützt werden; vorzugsweise besteht dieser Werkstoff aus oxidischem Material, wie beispielsweise Zirkoniumdioxid, Siliciumdioxid oder Zinnoxid oder auch einer Mischung aus verschiedenen Oxiden.

## Patentansprüche

1. Infrarotstrahler mit in einem Hüllrohr aus Quarzglas oder Quarzgut angeordnetem Heizleiter und einer auf wenigstens einen Teil der Oberfläche des Hüllrohres aufgebrachten metallischen Reflexionsschicht, **dadurch gekennzeichnet, dass** die Reflexionsschicht (21) aus einem Glanzedelmetallpräparat durch Einbrennen auf Quarzglas oder Quarzgut bei einer Minimaltemperatur von +900°C, bestehend aus einer oder mehreren organischen Edelmetallverbindungen, mindestens einem Flussmittel aus organischen Metallverbindungen und mindestens einem organischen Träger, der als Bindemittel dient, gebildet ist.

2. Infrarotstrahler nach Anspruch 1, **dadurch gekennzeichnet, dass** die Reflexionsschicht (21) aus einem Glanzedelmetallpräparat, das
- rhodiumfrei ist,
- mindestens eine organische Gold-, Platin-, Silber- oder Palladium-Verbindung enthält,
- Cr in Form mindestens einer organischen Verbindung aufweist, wobei der Cr-Gehalt 0,01 bis 1,0 Mol Cr pro Mol Edelmetall beträgt,
- mindestens ein weiteres Element aus der Gruppe Ni und Si in Form organischer Verbin dungen aufweist, wobei der Gesamtgehalt an Cr, Ni und Si 0,2 bis 3 Mol pro Mol Edelme tall in der Reflexionsschicht beträgt, und
- der Edelmetallgehalt, bezogen auf das Präparat, im Bereich von 6 bis 20 Gewichts-% liegt, gebildet ist.

3. Infrarotstrahler nach Anspruch 2, **dadurch gekennzeichnet, dass** der Cr-Gehalt der Reflexionsschicht (21) 0,05 bis 0,4 Mol Cr pro Mol Edelmetall beträgt.

4. Infrarotstrahler nach Anspruch 3, **dadurch gekennzeichnet, dass** der Gesamtgehalt der Reflexionsschicht (21) an Si, Cr, und Ni 0,25 bis 1,50 Mol pro Mol Edelmetall beträgt.

5. Infrarotstrahler nach einem der Ansprüche 1 bis 4, **dadurch gekennzeichnet, dass** die Reflexionsschicht (21) mindestens ein weiteres Element aus der Gruppe Cu, Co, Sn, Zr und Bi aufweist, wobei der Gehalt an Cu, Co, Sn, Zr und Bi jeweils bis 0,3 Mol pro Mol Edelmetall beträgt.

6. Infrarotstrahler nach einem der Ansprüche 1 bis 5, **dadurch gekennzeichnet, dass** die Reflexionsschicht (21) mindestens ein weiteres Element aus der Gruppe B, Al, Ca, Ti, V, Mn, Fe, Zn, Ge, Pb, Sr, Mo, Ru, In, Ba, Ta, W, Os, Ir und Ce aufweist, wobei der Gehalt an B, Al, Ca, Ti, V, Mn, Fe, Zn, Ge, Pb, Sr, Mo, Ru, In, Ba, Ta, W, Os, Ir und Ce jeweils bis 0,3 Mol pro Mol Edelmetall beträgt.

7. Infrarotstrahler nach einem der Ansprüche 1 bis 6, **dadurch gekennzeichnet, dass** der Edelmetallgehalt des zur Bildung der Reflexionsschicht (21) vorgesehenen Glanzedelmetallpräparats bezogen auf das Präparat, 6 bis 14 Gewichts-% beträgt.

8. Infrarotstrahler nach einem der Ansprüche 1 bis 7, **dadurch gekennzeichnet, dass** die Reflexionsschicht (21) thoriumfrei ist.

9. Infrarotstrahler nach einem der Ansprüche 1 bis 8, **dadurch gekennzeichnet, dass** die Dicke der Reflexionsschicht (21) im Bereich von 0,05 um bis 5 µm liegt.

10. Infrarotstrahler nach einem der Ansprüche 1 bis 9, **dadurch gekennzeichnet, dass** die Reflexionsschicht auf einem als Hohlzylinder ausgebildeten Hüllrohr aufgebracht ist.

11. Infrarotstrahler nach einem der Ansprüche 1 bis 10, **dadurch gekennzeichnet, dass** die Reflexionsschicht (21) auf einem als Teil eines Zwillingsrohres ausgebildeten Hüllrohr (6) aufgebracht ist.

12. Infrarotstrahler nach einem der Ansprüche 1 bis 11, **dadurch gekennzeichnet, dass** die Reflexionsschicht auf einem kreiszylindrischen Hüllrohr als Mantelsegment mit einem Öffnungswinkel im Bereich von 50° bis 300° aufgebracht ist.

13. Infrarotstrahler nach einem der Ansprüche 1 bis 12, **dadurch gekennzeichnet, dass** die Reflexionsschicht (21) mit wenigstens einem anorganischen Schutzüberzug versehen ist.

14. Infrarotstrahler nach Anspruch 13, **dadurch gekennzeichnet, dass** die Reflexionsschicht (21) mit einem Schutzüberzug aus Zirkoniumsdioxid, Siliziumdioxid, Zinnoxid oder einem Gemisch aus mindestens zwei dieser Oxide versehen ist.

15. Verfahren zur Bildung einer Reflexionsschicht auf einem Hüllrohr aus Quarzglas oder Quarzgut für einen mit Heizleiter versehenen Infrarotstrahler, **dadurch gekennzeichnet, dass** ein Glanzedelmetallpräparat nach einem der Ansprüche 1, 2 und 7 auf wenigstens eine Oberfläche des Hüllrohres aufgebracht und nachfolgend in einem Temperaturbereich von 900°C bis 1300°C, vorzugsweise im Temperaturbereich von 900°C bis 1200°C eingebrannt wird.

16. Verfahren nach Anspruch 15, **dadurch gekennzeichnet, dass** das Glanzedelmetallpräparat durch Sprühen auf die Oberfläche des Hüllrohres aufgebracht wird.

17. Verfahren nach Anspruch 15, **dadurch gekennzeichnet, dass** das Glanzedelpräparat mit Hilfe eines Abziehbildes auf die Oberfläche des Hüllrohres aufgebracht wird.

18. Verfahren nach Anspruch 15, **dadurch gekennzeichnet, dass** das Glanzedelpräparat durch Aufstreichen aufgebracht wird.

19. Verfahren nach einem der Ansprüche 15 bis 18, **dadurch gekennzeichnet, dass** das Glanzedelmetallpräparat zur Bildung der Reflexionsschicht auf der Rückseite des Hüllrohrs aufgebracht wird.

20. Verfahren nach einem der Ansprüche 15 bis 19, **dadurch gekennzeichnet, dass** das Glanzedelmetallpräparat zur Bildung der Reflexionsschicht auf der Innenseite des Hüllrohres aufgebracht wird.
